# EUROPEAN PATENT APPLICATION

(11) **EP 3 769 629 A1**
(43) Date of publication of application: **27.01.2021**
(21) Application number: 19772455.2
(22) Date of filing: 22.03.2019
(51) Int. Cl.: A23L 2/02, A23L 2/00, A23L 2/52, A23L 2/70, A23L 2/80

(54) **AROMA-FREE PEAR JUICE**

(30) Priority: 23.03.2018 JP 2018056386
(71) Applicant: Suntory Holdings Limited, Osaka 530-8203 (JP)
(72) Inventor: TAKAYANAGI, Keisuke, Kawasaki-shi, Kanagawa 211-0067 (JP); FUJIE, Akiko, Kawasaki-shi, Kanagawa 211-0067 (JP); YOKOO, Yoshiaki, Kawasaki-shi, Kanagawa 211-0067 (JP); NISHIBORI, Tomoyuki, Kawasaki-shi, Kanagawa 211-0067 (JP)
(74) Representative: Mewburn Ellis LLP
(86) International application number: PCT/JP2019/012092
(87) International publication number: WO 2019/182116

(57) **Abstract**

The present invention pertains to a fruit juice composition wherein the content of an aroma component is reduced but the content of a nutritional functional component and the content of a saccharide are not substantially reduced, a method for producing the composition, and a food or beverage containing the composition.

## Description

### Technical Field

The present invention relates to a fruit juice composition (herein, also referred to as "aroma-free pear juice") reduced in content of a flavor component and not substantially decreased in saccharides and nutritional function components, a method for producing the composition, and a food or beverage product including the composition.

### Background Art

Fruit juices are one of raw materials most often used in production of refreshing drinks. Fruit juices can be blended with refreshing drinks to thereby provide unique relish, in particular, aroma special for original fruits, and complicated savor, for example, sweetness, tartness, bitterness, and body.

Fruit juices also include a variety of nutritional function components such as saccharides, sugar alcohols, dietary fiber, organic acids, electrolytes, minerals, vitamins, and polyphenols, in addition to flavor components, and can also be said to be sources of these components.

While beverages have been produced in industrial plants and single fruit juices and/or blended fruit juices have been first compounded to thereby supply beverages of various variations of relish into the market, many flavor components special to each fruit juice have been then formed into aroma materials due to progression of techniques such as analysis and extraction, and have been widely used for beverage designing, as raw materials capable of more conveniently and efficiently providing individual fruit specificities.

On the other hand, a technique for producing fruit juice-derived white sugar called fruit sugar is developed with respect to saccharides as main components of a fruit juice, and is currently utilized widely (Patent Literature 1).

While Japanese Patent Laid-Open No. H04-500903 (Patent Literature 2) describes removal of relish of a fruit juice-containing sweet composition by contact of a concentrated liquid with activated carbon for a predetermined time, only any flavor component is not singly selectively removed, and a problem is that nutritious components are also decreased according to a significant decrease in flavor components.

Japanese Patent Laid-Open No. 2003-55248 (Patent Literature 3) proposes, in view of Morinda citrifolia juices having peculiar strong odor, a method for removing strong odor by use of activated carbon, silica gel, an ion-exchange resin, an adsorption resin, activated clay, or the like.

Japanese Patent Laid-Open No. H11-46735 (Patent Literature 4) describes Examples where an easy-to-drink beverage is obtained by processing an apple juice or a grape juice with activated carbon or distillation under reduced pressure.

### Citation List

### Patent Literatures

Patent Literature 1: Japanese Translation of PCT International Application Publication No. 2015-527356
Patent Literature 2: Japanese Patent Laid-Open No. H04-500903
Patent Literature 3: Japanese Patent Laid-Open No. 2003-55248
Patent Literature 4: Japanese Patent Laid-Open No. H11-46735

### Summary of Invention

### Technical Problem

There, however, have not been studied any fruit juice-derived composition and any preparation technique thereof which are obtained by not only focusing on saccharides and nutritional function components in a pear juice and allowing these components to substantially remain, but also decreasing or removing only any flavor component.

In view of the problems of the prior art, an object of the present invention is to provide a pear juice composition reduced in content of a flavor component and not substantially decreased in saccharides and nutritional function components, a method for producing the fruit juice composition, and a food or beverage product using the fruit juice composition.

### Solution to Problem

The present inventors have removed only any flavor component from a pear juice, and thus have first invented a fruit juice composition which not only has saccharides and nutritional function components substantially equivalent to those of a pear juice as a raw material, but also provides a variety of applications.

That is, the present invention is as follows.
[1] A fruit juice composition reduced in content of a flavor component and not substantially decreased in two or more components of nutritional function components and one or more components of saccharides, as compared with a pear juice as a raw material.
[2] The composition according to [1], wherein the nutritional function components are at least two selected from the group consisting of mineral, organic acid, vitamin, polyphenol, protein, amino acid, dietary fiber and glucide (except for saccharides).
[3] The composition according to [1] or [2], wherein the nutritional function components are at least two selected from the group consisting of citric acid, malic acid, sorbitol, and total sixteen amino acids except for asparagine, cysteine, glutamine and tryptophan among twenty amino acids constituting proteins.
[4] The composition according to any of [1] to [3], wherein the saccharides correspond to at least one selected from the group consisting of fructose, glucose and sucrose.
[5] The composition according to any of [1] to [4], wherein the flavor component is one or more selected from the group consisting of flavor components of aldehydes, flavor components of alcohols, flavor components of esters, flavor components of ketones and flavor components of amines.
[6] The composition according to [5], wherein any one or more of a total content of the flavor components of aldehydes, a total content of the flavor components of alcohols, a total content of the flavor components of esters, a total content of the flavor components of ketones and a total content of the flavor components of amines are reduced to 90% or less.
[7] The composition according to [5] or [6], wherein the flavor components of aldehydes correspond to one or more selected from acetaldehyde, nonanal, 2-methylbutanal, furfural and benzaldehyde.
[8] The composition according to any of [5] to [7], wherein the flavor components of alcohols correspond to one or more selected from isobutyl alcohol, 3-methyl-1-butanol, 1-pentanol, 1-butanol, furfuryl alcohol, benzyl alcohol, 1-hexanol, 1-nonanol, 2-ethyl-1-hexanol, 2-methyl-1-butanol and 1-octanol.
[9] The composition according to any of [5] to [8], wherein the flavor components of esters correspond to one or more selected from butyl acetate, ethyl acetate, ethyl butyrate, methyl butyrate and ethyl hexanoate.
[10] The composition according to any of [1] to [9], comprising ethyl acetate, butyl acetate and 1-butanol as the flavor components, wherein a total content thereof is decreased as compared with a fruit juice as a raw material.
[11] The composition according to any of [1] to [10], wherein a total content of ethyl acetate, 2-methylbutanal, butyl acetate, pyridine, 2-methyl-1-butanol, p-cymene, 1-hexanol, furfural, furfuryl alcohol and 1-butanol of the flavor components is 0.70 or less in terms of a ratio of an area value thereof relative to a peak area value of a concentration of 10 ppb of borneol as an internal standard material in gas chromatography measurement.
[12] A method for producing a fruit juice composition reduced in content of a flavor component and not substantially decreased in two or more components of nutritional function components and one or more components of saccharides, as compared with a pear juice as a raw material, the method comprising a step of decreasing the flavor component from a pear juice.
[13] The method according to [12], wherein the flavor component is decreased by contacting the pear juice with a porous adsorbent.
[14] The method according to [13], wherein the porous adsorbent is at least one selected from the group consisting of activated carbon, zeolite, silica, apatite and a polymer adsorbent.
[15] The method according to [13] or [14], wherein the porous adsorbent has an average pore size of 0.2 to 0.5 nm.
[16] The method according to any of [13] to [15], wherein the porous adsorbent is at a concentration of 500 to 6000 ppm.
[17] The method according to any of [13] to [16], wherein the porous adsorbent is activated carbon.
[18] A beverage comprising the composition according to any of [1] to [11].
[19] The beverage according to [18], wherein a Brix of the composition is less than 5 in total.
[20] The beverage according to [18] or [19], wherein a flavor component of a fruit different from a pear as a raw material of the composition is added.
[21] The beverage according to any of [18] to [20], wherein a high intensity sweetener is added.
[22] The beverage according to [21], wherein the high intensity sweetener is at least one selected from the group consisting of rebaudioside M, rebaudioside D, rebaudioside A, steviol, steviol glycoside, a stevia extract, stevioside, mogroside IV, mogroside V, a Lo Han Guo sweetener, monatin, curculin, glycyrrhizin, thaumatin, monellin, aspartame, advantame, alitame, saccharin, cyclamate, acesulfame K, sucralose, dulcin, brazzein, neohesperidin dihydrochalcone and a combination thereof.
[23] A liquid composition comprising:
   one or more fruit juice-derived saccharides;
   one or more flavor components; and
   one or more nutritional function components, wherein
   the composition comprises, in the flavor components, one or more flavor components selected from ethyl acetate, 2-methylbutanal, butyl acetate, pyridine, 2-methyl-1-butanol, p-cymene, 1-hexanol, furfural, furfuryl alcohol and 1-butanol, and a whole content of the one or more flavor components is 0.70 or less in terms of a ratio of an area value thereof relative to a peak area value of a concentration of 10 ppb of borneol as an internal standard material, as measured in gas chromatography, and
   the composition comprises, in the nutritional function components, any one or more of the following:
      citric acid: 230 ppm to 310 ppm,
      malic acid: 1,300 ppm to 2,000 ppm, and
      sorbitol: 21,800 ppm to 30,000 ppm.
[24] The liquid composition according to [23], wherein the composition comprises, in the flavor components, any of ethyl acetate, butyl acetate and 1-butanol.
[25] The liquid composition according to [23] or [24], wherein the composition further comprises, in the nutritional function components, amino acid.
[26] The liquid composition according to any of [23] to [25], wherein a Brix is 8 to 20.
[27] A beverage comprising the liquid composition according to any of [23] to [26].
[28] The beverage according to [27], wherein a Brix is 1 to 10.
[29] A 2- to 10-fold concentrated product of the liquid composition according to any of [23] to [26].
[30] A concentrated liquid composition comprising:
   one or more fruit juice-derived saccharides;
   one or more flavor components; and
   one or more nutritional function components, wherein
   the composition comprises, in the flavor components, one or more flavor components selected from ethyl acetate, 2-methylbutanal, butyl acetate, pyridine, 2-methyl-1-butanol, p-cymene, 1-hexanol, furfural, furfuryl alcohol and 1-butanol, and a whole content of the one or more flavor components is 4.55 or less in terms of a ratio of an area value thereof relative to a peak area value of a concentration of 10 ppb of borneol as an internal standard material, as measured in gas chromatography, and
   the composition comprises, in the nutritional function components, any one or more of the following:
      citric acid: 1,495 ppm to 2,015 ppm,
      malic acid: 8,450 ppm to 13,000 ppm, and
      sorbitol: 141,700 ppm to 195,000 ppm.

### Advantageous Effects of Invention

The method of the present invention provides a fruit juice composition which not only has saccharides and nutritional function components substantially equivalent to those of a pear juice as a raw material, but also can be used in a variety of applications, as well as a food or beverage product including the composition. The present invention provides a method for not only allowing saccharides and nutritional function components to substantially remain, but also decreasing or removing only any flavor component from a pear juice as a raw material.

### Description of Embodiments

Hereinafter, the present invention will be described in detail. The following embodiments are illustrative for describing the present invention, and are not intended to limit the present invention only to these embodiments. The present invention can be carried out in various forms without departing from the gist thereof.

### 1. Fruit juice composition reduced in content of a flavor component

A first aspect of the present invention provides a fruit juice composition reduced in content of a flavor component and not substantially decreased in two or more components of nutritional function components and one or more components of saccharides, as compared with a pear juice as a raw material (hereinafter, referred to as "the composition of the present invention").

When a pear juice is used as a raw material for production of a food or beverage product, applications thereof may be restricted due to flavor component included in the pear juice. The composition of the present invention, however, not only is decreased in flavor component, but also allows saccharides and nutritional function components equivalent to those of the pear juice as a raw material to be retained, and thus can be utilized in various food or beverage products. According to a preferable aspect of the present invention, the fruit juice composition of the present invention is used as a composition for a sweetener.

The "flavor component" in the present invention is not particularly limited as long as the component is included in the pear juice as a raw material and is a volatile component, and examples thereof can include any one or more selected from the group consisting of flavor components of aldehydes, flavor components of alcohols, flavor components of esters, flavor components of ketones and flavor components of amines.

The flavor components of aldehydes mean any compounds each having an aldehyde group in its molecule, among the flavor components, and examples thereof can include one or more selected from acetaldehyde, nonanal, 2-methylbutanal, furfural, and benzaldehyde.

The flavor components of alcohols mean any compounds each having a hydroxyl group in its molecule, among the flavor components, and examples thereof can include one or more selected from isobutyl alcohol, 3-methyl-1-butanol, 1-pentanol, 1-butanol, furfuryl alcohol, benzyl alcohol, 1-hexanol, 1-nonanol, 2-ethyl-1-hexanol, 2-methyl-1-butanol and 1-octanol.

The flavor components of esters mean any compounds each having an ester bond in its molecule, among the flavor components, and examples thereof can include one or more selected from butyl acetate, ethyl acetate, ethyl butyrate and ethyl hexanoate.

The flavor components of ketones mean any compounds each having a carbonyl group in its molecule, among the flavor components, and examples thereof can include one or more selected from damascenone and geranylacetone.

The flavor components of amines mean any compounds each having an amine group in its molecule, among the flavor components, and examples thereof can include pyridine.

The flavor component in the present invention may encompass any flavor component other than the above flavor components of aldehydes, flavor components of alcohols, flavor components of esters, flavor components of ketones and flavor components of amines. Examples of such any other flavor component can include p-cymene.

According to one aspect of the present invention, the composition of the present invention includes, in the flavor components, ethyl acetate, butyl acetate and 1-butanol, and the total content thereof is reduced as compared with the fruit juice as a raw material.

The "reduced in content of a flavor component" here means that, when the composition of the present invention is prepared with the pear juice as a raw material, the amount of flavor component contained in the composition of the present invention is small as compared with the pear juice. It is noted that the "reduced in content of a flavor component" in the present invention does not encompass a case where the pear juice is left to still stand as it is and thus is decreased in flavor component. It is necessary for saying the "reduced in content of a flavor component" in the present invention to perform an artificial operation as stated in the following section "2. Method for producing fruit juice composition reduced in content of a flavor component".

In one aspect of the present invention, it is meant that the content of at least one flavor component in the composition of the present invention is reduced as compared with the fruit juice as a raw material and the remaining rate after the reduction is 90% or less, 85% or less, 80% or less, 75% or less, 70% or less, 65% or less, 60% or less, 55% or less, 50% or less, 45% or less, 40% or less, 35% or less, 30% or less, 25% or less, 20% or less, 15% or less, 10% or less, or 5% or less. The content of the flavor components can be compared by, for example, the area value in measurement according to a gas chromatographic measurement method for use in Example 2 described below. According to another aspect of the present invention, the total amount of ethyl acetate, 2-methylbutanal, butyl acetate, pyridine, 2-methyl-1-butanol (2-methylbutyl alcohol), p-cymene, 1-hexanol, furfural, furfuryl alcohol (2-Furanmethanol) and 1-butanol is reduced as compared with the fruit juice as a raw material.

According to another aspect of the present invention, the whole amount of ethyl acetate, 2-methylbutanal, butyl acetate, pyridine, 2-methyl-1-butanol, p-cymene, 1-hexanol, furfural, furfuryl alcohol and 1-butanol in the composition of the present invention, as the area value in measurement according to a gas chromatographic measurement method (for example, measurement method in Example 2 described below), is 37,000,000 or less, 35,000,000 or less, 30,000,000 or less, 25,000,000 or less, 20,000,000 or less, 15,000,000 or less, 10,000,000 or less, 9,000,000 or less, 8,000,000 or less, 7,000,000 or less, or 6,000,000 or less in total.

In the case of an untreated fruit juice, the whole amount of flavor components (ten flavor components of ethyl acetate, 2-methylbutanal, butyl acetate, pyridine, 2-methyl-1-butanol, p-cymene, 1-hexanol, furfural, furfuryl alcohol and 1-butanol), as the area value in measurement according to a gas chromatographic measurement method (for example, measurement method in Example 2 described below), is 41,875,944 (±5%).

Alternatively, in a case where the area value in measurement by gas chromatography is determined by adding a predetermined amount of borneol as an internal standard material, the area value can be represented as the ratio thereof relative to the peak area value of borneol as an internal standard material. That is, the peak area value of each component can be represented as the value obtained by dividing by the peak standard value of borneol as an internal standard material. For example, in a case where the whole amount of the ten flavor components of an untreated fruit juice is 41,875,944 in terms of the peak area value and the peak standard value of borneol is 47,304,521, the ratio relative to the peak area value of borneol as an internal standard material is 0.885. The total content of ethyl acetate, 2-methylbutanal, butyl acetate, pyridine, 2-methyl-1-butanol, p-cymene, 1-hexanol, furfural, furfuryl alcohol and 1-butanol in the composition of the present invention is preferably 0.70 or less, more preferably 0.50 or less, further preferably 0.30 or less in terms of the ratio of the area value thereof relative to the peak area value of borneol as an internal standard material in gas chromatography measurement. In one aspect of the present invention, borneol as an internal standard material is present in a concentration of 10 ppb in the composition of the present invention.

In a certain embodiment, the whole amount of the flavor components of aldehydes contained in the composition of the present invention is reduced to 90% or less, 85% or less, 80% or less, 75% or less, 70% or less, 65% or less, 60% or less, 55% or less, 50% or less, 45% or less, 40% or less, 35% or less, 30% or less, 25% or less, 20% or less, 15% or less, 10% or less, or 5% or less, as compared with the pear juice as a raw material.

In another embodiment, the whole amount of the flavor components of alcohols contained in the composition of the present invention is reduced to 90% or less, 85% or less, 80% or less, 75% or less, 70% or less, 65% or less, 60% or less, 55% or less, 50% or less, 45% or less, 40% or less, 35% or less, 30% or less, 25% or less, 20% or less, 15% or less, 10% or less, or 5% or less, as compared with the pear juice as a raw material.

In yet another embodiment, the whole amount of the flavor components of esters contained in the composition of the present invention is reduced to 90% or less, 85% or less, 80% or less, 75% or less, 70% or less, 65% or less, 60% or less, 55% or less, 50% or less, 45% or less, 40% or less, 35% or less, 30% or less, 25% or less, 20% or less, 15% or less, 10% or less, or 5% or less, as compared with the pear juice as a raw material.

In yet another embodiment, the whole amount of the flavor components of ketones contained in the composition of the present invention is reduced to 90% or less, 85% or less, 80% or less, 75% or less, 70% or less, 65% or less, 60% or less, 55% or less, 50% or less, 45% or less, 40% or less, 35% or less, 30% or less, 25% or less, 20% or less, 15% or less, 10% or less, or 5% or less, as compared with the pear juice as a raw material.

In still another embodiment, the whole amount of the flavor components of amines contained in the composition of the present invention is reduced to 90% or less, 85% or less, 80% or less, 75% or less, 70% or less, 65% or less, 60% or less, 55% or less, 50% or less, 45% or less, 40% or less, 35% or less, 30% or less, 25% or less, 20% or less, 15% or less, 10% or less, or 5% or less, as compared with the pear juice as a raw material.

The flavor components can be quantitatively determined by a method such as gas chromatography and/or liquid chromatography.

Alternatively, the flavor components can be evaluated according to a sensory test by panelists. In a case where the sensory test is performed, the fruit juice as a raw material can be defined as a control to perform evaluation according to indexes of aroma intensity felt due to the flavor components, as compared with the control, such as (1) a case of being felt comparably, (2) a case of being felt slightly weakly, (3) a case of being felt weakly, and (4) a case of not being felt at all. Furthermore, the respective cases (1) to (4) are scored to thereby allow the aroma intensity to be evaluated as numerical values.

While the detail of the method for removing the flavor component from the pear juice as a raw material will be described below, the method enables the flavor component to be selectively removed from the fruit juice. Accordingly, the composition of the present invention, obtained by the method, although reduced in content of a flavor component, is not substantially reduced in amounts of the saccharides and the nutritional function components, as compared with a pear juice as a raw material.

Thus, the composition of the present invention is substantially the same as the pear juice as a raw material in terms of the composition of the saccharides and the nutritional function components, and can contribute to maintenance and improvement of health of consumers.

The "nutritional function components" here refer to nutrients for humans, and mean any two or more selected from the group consisting of mineral, organic acid, vitamin, polyphenol, protein, amino acid, dietary fiber and glucide (except for saccharides).

Examples of the mineral include one or more selected from sodium, potassium, zinc, iron, copper and manganese.

Examples of the organic acid include one or more selected from citric acid, malic acid, tartaric acid, succinic acid and acetic acid.

Examples of the vitamin include one or more selected from β-carotene, vitamin A, carotene, vitamin B1, vitamin B2, vitamin B6, vitamin B12, inositol, folic acid, vitamin C and vitamin E.

Examples of the polyphenol include one or more selected from anthocyanins, flavones, hesperidin and catechins.

The "protein" in the present invention is any compound obtained by linearly polymerizing various L-amino acids (any L-amino acids selected from twenty amino acids) via a peptide bond.

Examples of the amino acids include L-forms of alanine (Ala), arginine (Arg), asparagine (Asn), asparaginic acid (Asp), cysteine (Cys), glutamine (Gln), glutamic acid (Glu), glycine (Gly), histidine (His), isoleucine (Ile), leucine (Leu), lysin (Lys), methionine (Met), phenylalanine (Phe), proline (Pro), serine (Ser), threonine (Thr), tryptophan (Trp), tyrosine (Tyr), and valine (Val).

Examples of the amino acid in the present invention include one or more of twenty amino acids constituting proteins. In a preferable aspect of the present invention, the fruit juice composition preferably includes any amino acids selected from neutral amino acids, acidic amino acids and basic amino acids among twenty amino acids constituting proteins, and preferably includes glycine, alanine, valine, leucine, isoleucine, serine, threonine, methionine, phenylalanine, tyrosine and proline as such neutral amino acids, asparaginic acid and glutamic acid as such acidic amino acids, and lysin, histidine and arginine as such basic amino acids, and preferably, the total amount thereof is not substantially reduced. That is, preferably, the total of sixteen amino acids except for asparagine, cysteine, glutamine and tryptophan among twenty amino acids constituting proteins is not substantially reduced.

Examples of the dietary fiber include one or more selected from protopectin, pectin, indigestible dextrin, indigestible oligosaccharide, β-glucan, gum Arabic, glucomannan.

Examples of the glucide (except for saccharides) include one or more selected from polysaccharides (for example, oligosaccharide, dextrin, and starch) and sugar alcohols (for example, erythritol and sorbitol).

Examples of the saccharides include one or more selected from monosaccharide and disaccharide, such as fructose, glucose, sucrose, galactose, rhamnose, lactose, maltose, trehalose, and other rare saccharide.

The "not substantially decreased in two or more components of nutritional function components and one or more components of saccharides as compared with a pear juice as a raw material" in the present invention means that, in a case where the content of any two or more components of the nutritional function components (namely, any two or more of components included in mineral, organic acid, vitamin, polyphenol, protein, amino acid, food fiber and glucide (except for saccharides)) and the content of any one or more components of the saccharides (namely, any one or more of components included in monosaccharide and disaccharide) are compared with the respective contents as standards in the pear juice as a raw material, the respective differences in the content of one or more components of the nutritional function components and the content of one or more components of the saccharides in the composition of the present invention, relative to the above standards, are within -9%, within -8%, within -7%, within -6%, within -5%, within -4%, within -3%, within - 2%, or within -1%. In a certain embodiment, the "one or more components of the nutritional function components and one or more components of the saccharides are not substantially decreased as compared with the pear juice as a raw material" in the present invention means that the respective contents of the nutritional function components and the saccharides in the composition of the present invention, when compared with the contents as standards in the pear juice as a raw material, are kept at 91% or more, 92% or more, 93% or more, 94% or more, 95% or more, 96% or more, 97% or more, 98% or more, or 99% or more relative to the contents as standards.

In a preferable aspect of the present invention, three or more components of the nutritional function components are not substantially decreased and more preferably four or more components of the nutritional function components are not substantially decreased, as compared with the pear juice as a raw material. In other preferable aspect of the present invention, two or more components of the saccharides are not substantially decreased and more preferably three or more components of the saccharides are not substantially decreased, as compared with the pear juice as a raw material. In a further preferable aspect of the present invention, two or more components of the nutritional function components and two or more components of the saccharides are substantially decreased, more preferably, three or more components of the nutritional function components and three or more components of the saccharides are not substantially decreased, as compared with the pear juice as a raw material. In a preferable aspect of the present invention, the nutritional function components are at least two selected from the group consisting of citric acid, malic acid, sorbitol and amino acid. In one aspect of the present invention, the amino acid may be so that at least one among twenty amino acids is not substantially decreased as compared with the fruit juice as a raw material, and in a preferable aspect of the present invention, the amino acid may be so that the total amount of "sixteen amino acids except for Asn, Cys, Gln and Trp" among twenty amino acids constituting proteins is not substantially decreased as compared with the fruit juice as a raw material. In other preferable aspect of the present invention, the saccharides correspond to at least one selected from the group consisting of fructose, glucose and sucrose.

In a preferable aspect of the present invention, the composition of the present invention has a taste equivalent to that of the fruit juice as a raw material. The "taste" herein refers to the taste quality expressed by any word such as sweetness, body, and complicated taste. While not bound to any theory, it is considered that some components of the saccharides and the nutritional function components included in the composition of the present invention have any influence on the taste. The composition of the present invention preferably has a taste closer to the fruit juice as a raw material because of being capable of resulting in not only sweetness and nutrition, but also deep savor, when added to a food or beverage product.

The pear juice as a raw material of the composition of the present invention is not particularly limited as long as the fruit juice is sufficiently decreased in special flavor for the fruit juice in reduction in content of flavor components. The pear (also referred to as Western pear) which can be here used is any of various breeds of pears, and examples thereof include, in addition to typical La France, Le Lectier and bartlett pear, but are not limited thereto.

The pear juice as a raw material of the composition of the present invention can be a cloudy fruit juice as a fruit juice including an insoluble solid, or a clarified fruit juice obtained by removing an insoluble solid according to any of various methods (for example, a precision filtration method, an enzyme treatment method, an ultrafiltration method, and a combined method thereof). A concentrated fruit juice obtained with concentration by squeezing a fruit juice and removing the water content thereof, such as a concentrated cloudy fruit juice or a concentrated clarified fruit juice, is often used usually in terms of storage space and transport cost, but is not limited thereto. In general, the lower limit concentration of the concentrated fruit juice is, for example, a Brix of 22 in the pear juice, and a frozen concentrated fruit juice having a Brix of about 40 to 70 as a degree of concentration is distributed, but is not limited thereto.

A whole fruit juice obtained by crushing the whole fruit including the full of a fruit and removing a particularly rigid solid such as a seed, a fruit puree obtained by pureeing a fruit, or a fruit juice obtained by crushing or extracting the fruit pulp of a dry fruit can be used. A fruit juice obtained by storing or leaving such a fruit juice without removal of any particular component to thereby result in removal of such any particular component can also be encompassed in a fruit juice usable as a raw material of the composition of the present invention.

### 2. Method for producing fruit juice composition reduced in content of a flavor component

A second aspect of the present invention provides a method for producing a fruit juice composition reduced in content of a flavor component and not substantially decreased in two or more components of nutritional function components and one or more components of saccharides, as compared with a pear juice as a raw material, the method including a step of decreasing the flavor component from a pear juice (hereinafter, referred to as "the method of the present invention").

The "pear juice" in the present invention is the same as in any example of the "pear juice as a raw material".

In the present invention, the "flavor component" is the same as described above, and the "reduced in content of a flavor component", the "two or more components of the nutritional function components and one or more components of the saccharides are not substantially decreased", and the "nutritional function components" are also the same as described above.

In the present invention, the "step of decreasing the flavor component from a pear juice" can be performed according to any of various methods such as a method using a porous adsorbent, a solvent extraction method, a steam distillation method, a reduced-pressure steam distillation method and a freeze-drying method, or a combination thereof, and is preferably performed by contacting a raw material fruit juice with a porous adsorbent from the viewpoints of safety and convenience.

The "porous adsorbent" means a particulate substance having a porous structure, and is at least one selected from the group consisting of activated carbon, zeolite, silica, apatite, a polymer adsorbent and a combination thereof. In a certain embodiment, the porous adsorbent is activated carbon.

The porous adsorbent in the present invention is not particularly limited as long as the flavor component can be removed by adsorption, and is preferably a hydrophobic porous adsorbent.

The porous adsorbent preferably has a most frequent size of 1.0 nm or less, 0.9 nm or less, 0.8 nm or less, 0.7 nm or less, 0.6 nm or less, 0.5 nm or less, 0.4 nm or less, 0.3 nm or less, or 0.2 nm or less, and 0.1 nm or more.

The porous adsorbent in the present invention may have a specific surface area of 800 to 2000 m²/g, 1000 to 1500 m²/g, or 1000 to 1300 m²/g, preferably 1000 to 1300 m²/g.

The porous adsorbent in the present invention may have an average pore size of 0.2 to 2.5 nm, 0.2 to 1.0 nm, or 0.2 to 0.7 nm, preferably 0.2 to 0.5 nm. The measurement conditions of the average pore size are as follows: a cylindrical model is used to perform calculation from the specific surface area according to the BET method and the pore volume according to the CI method.

The porous adsorbent in the present invention may have any combination of characteristics and numerical values of the above hydrophobicity, most frequent size, specific surface area and average pore size.

Examples of such a porous adsorbent include GLC-P, a ground product of GW-H, and PGW-150MP (all are from Kuraray Co., Ltd.), and PGW-150MP (Kuraray Co., Ltd.) can be preferably used.

The amount of the porous adsorbent added in contact of the raw material fruit juice with the porous adsorbent in the step of decreasing the flavor component from a pear juice is 1000 to 10000 ppm, 1000 to 5000 ppm, 1000 to 3000 ppm, or 1000 to 2500 ppm. Herein, "ppm" means "ppm" on a mass basis.

The temperature in the case of contact of the raw material fruit juice with the porous adsorbent is 3 to 30°C, 10 to 30°C, 15 to 30°C, or 20 to 30°C.

The pH in the case of contact of the raw material fruit juice with the porous adsorbent corresponds to the pH which the raw material fruit juice originally has, and is usually a pH of 3 to 7, a pH of 3 to 6, or a pH of 3 to 5, preferably a pH of 4 to 5.

The reaction system in contact of the raw material fruit juice with the porous adsorbent may be under a stirring condition or under no stirring condition.

The lower limit of the reaction time where the raw material fruit juice is contacted with the porous adsorbent may be 1 hour or more, 2 hours or more, 3 hours or more, 4 hours or more, 5 hours or more, 6 hours or more, 7 hours or more, 8 hours or more, 9 hours or more, or 10 hours or more, the upper limit thereof is not particularly limited and may be within 24 hours, within 18 hours, within 12 hours, within 10 hours, within 8 hours, within 6 hours, or within 4 hours, and the lower limit and the upper limit may be arbitrarily combined. The reaction time may be, for example, 1 to 24 hours, 2 to 24 hours, 3 to 24 hours, 4 to 24 hours, 5 to 24 hours, 6 to 24 hours, 7 to 24 hours, 8 to 24 hours, 9 to 24 hours, or 10 to 24 hours.

The Brix in an activated carbon treatment is not particularly limited, and, for example, a frozen concentrated fruit juice, when used, can be diluted to any concentration with a solvent such as water for reduction of the Brix before the treatment (about 40 to 70), and then subjected to the activated carbon treatment. As one specific example, pure water is added to a common concentrated fruit juice (for example, Brix 65), thereby adjusting the Brix to about 5 to 20 (for example, 10), the porous adsorbent (for example, PGW-150MP) is added thereto at 1000 to 10000 ppm (for example, 2500 ppm), and the resultant is subjected to a stirring treatment for about 1 to 10 hours (for example, 5 hours). Thereafter, the porous adsorbent is removed in a proper step (centrifugation, filtration), thereby enabling a fruit juice composition decreased in flavor component to be obtained. Furthermore, the fruit juice composition can be concentrated, thereby obtaining a fruit juice composition again adjusted to a predetermined Brix. An operation according to this procedure can be performed to thereby perform the method of the present invention.

The method of concentration is not particularly limited as long as the water content in the fruit juice composition can be removed, and can be performed according to a known common method. For example, a common heating concentration method or non-heating concentration method can be used in the method of the present invention. Examples of the heating concentration method include, in addition to a concentration method by simple heating, a multi-effect evaporator distillation method, a vacuum evaporation concentration method, and a centrifugal thin film concentration method. Examples of the non-heating concentration method include a reverse osmosis concentration method and a freeze concentration method. In the case of the heating concentration method, it is desirable to perform concentration in a low temperature condition of, for example, about 40 to 70°C by use of a multi-effect evaporator distillation method, a vacuum evaporation concentration method or a centrifugal thin film concentration method, from the viewpoint of suppression of influence of heating on the nutritional function components and the saccharides in the fruit juice composition.

### 3. Food or beverage product including fruit juice composition reduced in content of a flavor component

Another embodiment of the present invention provides a food or beverage product including the composition of the present invention.

The composition of the present invention is decreased in flavor of the raw material pear juice and thus can be added to various food or beverage products (or raw materials thereof). The food or beverage product (or any raw material thereof) thus obtained can be prepared so as to have different relish from the raw material fruit juice, by addition of another flavor component.

The "food or beverage product" is a collective term of products which are in any form of a solid, a fluid, and a liquid, and a mixture thereof and which can be orally taken, and encompasses a variety of beverages and foods. Examples of the food or beverage product of the present invention include a dietary supplement food or beverage product, a health food or beverage product, a functional food or beverage product, an infant food or beverage product, baby's modified milk, underweight baby's modified milk, and a geriatric food or beverage product.

Such a dietary supplement food or beverage product refers to a food or beverage product where a particular nutrient component is enhanced. Such a health food or beverage product refers to a food or beverage product which is healthy or is believed to be healthful, and examples thereof include a dietary supplement food or beverage product, a natural food or beverage product, and a dietary food or beverage product. Such a functional food or beverage product refers to a food or beverage product for supplement of any nutrient component serving to regulate the body, and has the same meaning as specified health foods. Such an infant food or beverage product refers to a food or beverage product to be given to a child until about six years old. Such a geriatric food or beverage product refers to a food or beverage product which is treated so as to be easily digested and absorbed as compared with an untreated food or beverage product. Such baby's modified milk refers to modified milk to be given to a child until about one year old. Such underweight baby's modified milk refers to modified milk to be given to an underweight baby aged birth to about six months.

The form of the food or beverage product is not particularly limited, and can take any of various forms. Examples of the form include a beverage, confectionery and a supplement. The beverage may be either an alcoholic beverage or a non-alcoholic beverage. Examples of the non-alcoholic beverage include a non-alcoholic beer, a malt beverage, a lactobacillus beverage, cocoa, an isotonic drink, a nutrition-supplement drink, a tea-based beverage, a coffee beverage, a carbonated beverage, a functional beverage, a fruit/vegetable-based beverage, a milky beverage, a soymilk beverage, and flavored water, but are not limited thereto.

The non-alcoholic beer herein means a carbonated beverage having beer-like relish, and does not substantially include any alcohol. The "non-alcoholic beer" herein is not intended to exclude any beverage containing an extremely slight amount of alcohol at a level which cannot be detected.

In a case where the composition of the present invention is any tea-based beverage, examples include a green tea beverage, an oolong tea beverage, a barley tea beverage, a brown rice tea beverage, an adlay tea beverage and a black tea beverage. The coffee beverage may be either packaged coffee or liquid coffee.

The carbonated beverage is preferably in the form of a cola flavor beverage, a clear carbonated beverage, ginger ale, a fruit juice-based carbonated beverage or a milk-containing carbonated beverage. Such functional beverages include an isotonic drink, an energy drink, a health support beverage and a pouch jelly beverage.

Examples of the fruit/vegetable-based beverage include a 100-percent fruit beverage, a fruit-containing beverage, a refreshing beverage containing a low-concentration fruit juice, a fruit beverage containing pulp granules, or a fruit pulp beverage. Such milky beverages include milk, drink yogurt, a lactobacillus beverage or a milk-containing refreshing beverage, and such soymilk beverages include soymilk or a soy beverage.

The alcoholic beverage refers to an alcohol-containing beverage, and may also be a shochu-based beverage. Examples of a raw material for allowing alcohol to be contained in the beverage include a brewed beverage, a distilled alcoholic beverage and a mixed liquor. Examples of the brewed beverage include wine and beer. Examples of the distilled alcoholic beverage include spirits (for example, gin, vodka, rum, tequila, and new spirit, and alcohol for raw materials (brewed alcohol)), liquors, whiskeys (for example, whiskey and brandy), and distilled spirits. The alcoholic beverage may be any beverage containing a detectable degree of alcohol, and contains, for example, 1% by volume or more, 2% by volume or more, 3% by volume or more, 4% by volume or more, or 5% by volume or more of alcohol.

Examples of a processed food product include processed food products of grain, seafood, and meat (bread, noodles, tortilla, pasta, ham, bacon, sausage, boiled fish paste, ageten, hanpen, and the like).

Examples of a milk product include butter, cheese, yogurt, and ghee.

Examples of the confectionery include candy, jam, chewing gum, ice cream, snack food, cookie, biscuit, cake, wafer, sweet bun, chocolate, and Japanese confectionery, but are not limited thereto.

The food or beverage product of the present invention may be in the form of a drug or quasi-drug, for example, a fine grain agent, a tablet, a granule, a powder, a capsule (including soft capsule and hard capsule), a chewable agent, or a syrup, or may be in the form of a natural fluid diet, a semi-digested nutrition food or a component nutrition food, or a processed product such as a health drink or an enteral nutrient, in which the composition of the present invention is blended to protein, saccharides, fats, a trace element, vitamins, an emulsifier, an aroma material.

The amount of the composition of the present invention included in the food or beverage product of the present invention is not particularly limited, and the composition is preferably added so that the Brix of the food or beverage product is less than 13, less than 12, less than 11, less than 10, less than 9, less than 8, less than 7, less than 6, less than 5, less than 4, less than 3, less than 2, or less than 1.

A second flavor component different from the flavor component removed in the composition of the present invention may be added to the food or beverage product of the present invention. The second flavor component added may be, for example, a flavor component derived from any flower such as rose, Japanese plum, Chinese orange, lemongrass, jasmine, camomile or orange osmanthus, any fruit such as strawberry, blueberry, raspberry, blackcurrant, redcurrant, cranberry, grape, muscat, melon, apple, orange, grapefruit, lemon, lime, citron, kabosu, hirami lemon, peach, pear, banana, pineapple, mango, passion fruit, guava, papaya, kiwi, apricot, acerola, Japanese medlar, pomegranate, honeyberry, fig tree, persimmon, Japanese plum, plum, cherry, prune or coconut, any vegetable such as celery, carrot, shiitake mushroom, watermelon, sweet potato, pumpkin, marron or perilla, any beverage such as coffee, green powdered tea, black tea, oolong tea, jasmine tea, cola or cider, any aroma material such as chocolate, vanilla, caramel or energy drink, or a combination thereof.

The second flavor component can be thus added to thereby allow for providing of a food or beverage product having a combination of any nutritional function component and any flavor component, which have not been present yet.

A high intensity sweetener may be added to the food or beverage product of the present invention.

The "high intensity sweetener" in the present invention means a compound having strong sweetness as compared with sucrose, and may be a naturally occurring compound, a synthetic compound, or a combination of a naturally occurring compound and a synthetic compound. The high intensity sweetener exhibits sweetness 5 times or more, 10 times or more, 50 times or more, 100 times or more, 500 times or more, 1000 times or more, 5000 times or more, 10000 times or more, 50000 times or more, 100000 times or more of that of sucrose in the same amount.

Specific examples of the "high intensity sweetener" include a peptide-based sweetener such as aspartame and neotame, a sucrose derivative such as sucralose, a synthetic sweetener such as acesulfame K and saccharin, a protein-based sweetener extracted from plant, such as thaumatin and monellin, or a plant extract including other high intensity sweetener component, for example, a stevia extract, a glycyrrhiza extract, a Momordica grosvenorii extract, and a sweetener component in such an extract, for example, steviol glycoside such as a stevia extract and a stevia derivative such as enzyme-treated stevia obtained by enzyme-treating stevia and adding glucose thereto, and glycoside obtained from a plant extract, obtained by treating Momordica grosvenorii and a Momordica grosvenorii extract, for example, mogroside glycoside. Examples of the steviol glycoside include stevioside, rebaudioside A, rebaudioside B, rebaudioside C, rebaudioside D, rebaudioside N, rebaudioside O and rebaudioside M. Examples of the mogroside glycoside include mogroside V.

The glycyrrhiza extract refers to one mainly containing glycyrrhizic acid, obtained by a root or rootstock of Glycyrrhiza uralensis Fischer, Glycyrrhiza inflata Batalin or Glycyrrhiza glabra Linne. Examples of the glycyrrhiza extract include a glycyrrhiza extract, glycyrrhizin, and a licorice extract.

The sucrose derivative is obtained by substituting an OH group or an H group of sucrose with another substituent, and examples thereof include a halogen derivative (sucralose) and an oxathiazinone dioxide derivative of sucrose, sugar alcohol, aldonic acid, and uronic acid.

In a certain aspect, the high intensity sweetener is at least one selected from the group consisting of rebaudioside M, rebaudioside D, rebaudioside A, steviol, steviol glycoside, a stevia extract, stevioside, mogroside IV, mogroside V, a Lo Han Guo sweetener, monatin, curculin, glycyrrhizin, thaumatin, monellin, aspartame, advantame, alitame, saccharin, cyclamate, acesulfame K, sucralose, dulcin, brazzein, neohesperidin dihydrochalcone and a combination thereof.

The high intensity sweetener which can be suitably used in the present invention is rebaudioside D, rebaudioside M, or a mixture of rebaudioside D and rebaudioside M. Rebaudioside D or rebaudioside M can be prepared by enzyme-treating a stevia extract and stevia, and has a sweetness about 200 times of that of sucrose. Rebaudioside D or rebaudioside M is less in negative flavor such as astringent taste and metallic taste which are observed in rebaudioside A, has characteristics of high-quality sweetness, and is expected to be used in the fields of foods and beverages (NIPPON KAGAKU KAISHI (5), (1981) 726 to 735, "Sweet diterpene glycosides of leaves of Stevia rebaudiana Bertoni-Synthesis and structure-sweetness relationship of rebaudiosides-A, -D, -E, and their related glycosides-", Kasai, Kaneda, Tanaka, Yamasaki, Sakamoto, Morimoto, Okada, Kitahata, and Furukawa). Thus, rebaudioside D or rebaudioside M is excellent in that such rebaudioside, when used singly, is less in odd taste and has sweetness close to that of sucrose, as compared with rebaudioside A.

Examples of a combination of high intensity sweeteners include the following. Specific examples include respective combinations of rebaudioside D and rebaudioside M, rebaudioside D and rebaudioside A, rebaudioside M and rebaudioside A, rebaudioside M and mogroside V, steviol glycoside and mogroside V, steviol glycoside and advantame, steviol glycoside and acesulfame K, steviol glycoside and sucralose, rebaudioside M, rebaudioside D and rebaudioside A, rebaudioside M, rebaudioside D and mogroside V, rebaudioside M, rebaudioside D and advantame, rebaudioside M, rebaudioside D and acesulfame K, rebaudioside M, rebaudioside D and sucralose, rebaudioside A, rebaudioside M, rebaudioside D and mogroside V, rebaudioside A, rebaudioside M, mogroside V and sucralose, rebaudioside D, rebaudioside M, mogroside V and acesulfame K, rebaudioside M, rebaudioside A, mogroside V and neohesperidin dihydrochalcone, and rebaudioside M, rebaudioside D, sucralose, neohesperidin dihydrochalconea and brazzein.

In a certain embodiment, the high intensity sweetener is at least one selected from the group consisting of rebaudioside M, rebaudioside D, rebaudioside A, steviol, steviol glycoside, a stevia extract, stevioside, mogroside IV, mogroside V, a Lo Han Guo sweetener, monatin, curculin, glycyrrhizin, thaumatin, monellin, aspartame, advantame, alitame, saccharin, cyclamate, acesulfame K, sucralose, dulcin, brazzein, neohesperidin dihydrochalcone and a combination thereof.

The high intensity sweetener may be added in a concentration of 10 to 1000 ppm, 20 to 900 ppm, 30 to 800 ppm, 40 to 700 ppm, 50 to 600 ppm, 60 to 6000 ppm, 70 to 600 ppm, 80 to 600 ppm, 90 to 600 ppm, 100 to 600 ppm, 100 to 1000 ppm, 100 to 800 ppm, or 10 to 500 ppm in total.

### 4. Liquid composition including fruit juice-derived saccharides, flavor component, and nutritional function component

Another embodiment of the present invention provides a liquid composition including fruit juice-derived saccharides, flavor component, and nutritional function component (hereinafter, referred to as "the liquid composition of the present invention").

The liquid composition of the present invention includes one or more fruit juice-derived saccharides, one or more flavor components, and one or more nutritional function components, wherein the composition includes, in the flavor component, one or more flavor components selected from ethyl acetate, 2-methylbutanal, butyl acetate, pyridine, 2-methyl-1-butanol, p-cymene, 1-hexanol, furfural, furfuryl alcohol and 1-butanol, and the whole content of the one or more flavor components is 0.70 or less in terms of the ratio of the area value thereof relative to the peak area value of a concentration of 10 ppb of borneol as an internal standard material, as measured in gas chromatography, and
the composition includes, in the nutritional function components, any one or more of the following:
citric acid: 230 ppm to 310 ppm,
malic acid: 1,300 ppm to 2,000 ppm, and
sorbitol: 21,800 ppm to 30,000 ppm.
The liquid composition of the present invention, in the case of being adjusted to have a Brix of 10 by dilution with pure water or concentration, also encompasses a composition having the above composition. In general, dilution with pure water merely increases the water content in the liquid composition, and thus the saccharides, the flavor components and the nutritional function components in the liquid composition are kept. Accordingly, for example, in the case of adjustment to a Brix of 10 by dilution with pure water 2-fold, the liquid composition having the above composition is a liquid composition including the saccharides, the flavor components and the nutritional function components in respective concentrations 2-fold of those in the liquid composition. In the case of concentration, while the flavor components may be decreased in some cases, the saccharides and the nutritional function components are kept. Accordingly, for example, a liquid composition having the above composition in the case of adjustment to a Brix of 10 by 2-fold concentration, the saccharides and the nutritional function components are included in respective concentrations 2-fold of those in the liquid composition, and the flavor components are included in a concentration 2-fold or less of that in the liquid composition.

In the present invention, the "fruit juice-derived saccharides" mean saccharides (one or more selected from monosaccharides and disaccharides, such as fructose, glucose, sucrose, galactose, rhamnose, lactose, maltose, trehalose, and other rare saccharide) obtained from a fruit juice. The "fruit juice" in the present embodiment refers to "C3 plant juice" and mainly refers to an edible fruit juice, and thus is distinguished from any juice of a C4 plant such as corn or sugar cane. The C3 plant means any plant which performs C3 type photosynthesis, and the C4 plant means any plant which performs C4 type photosynthesis. The saccharides derived from the C3 plant juice and the saccharides derived from the C4 plant juice can be distinguished from each other by measuring the respective stable carbon isotope ratios in such components, and can be distinguished from each other according to a known method such as a stable carbon isotope ratio analysis method (SCIRA method). Alternatively, these may also be distinguished from each other by commissioning analysis to an analytical institution (for example, Isotope Research Institute). Examples of the C3 plant include general edible fruits, and examples of the C4 plant include corn and sugar cane. The fruit juice is preferably a pear juice.

In the present invention, the "flavor components" and the "nutritional function components" are the same as those described in "1. Fruit juice composition reduced in content of a flavor component".

The liquid composition of the present invention includes one or more flavor components selected from ethyl acetate, 2-methylbutanal, butyl acetate, pyridine, 2-methyl-1-butanol, p-cymene, 1-hexanol, furfural, furfuryl alcohol and 1-butanol. The whole content of such one or more flavor components is 0.70 or less, preferably 0.50 or less, more preferably 0.30 or less in terms of the ratio relative to the peak area value of borneol as an internal standard material in measurement with gas chromatography. A preferable lower limit value with respect to the flavor components is 0.001 or more, or 0.010 or more in terms of the area ratio. In one aspect of the present invention, borneol as an internal standard material is present in a concentration of 10 ppb in the liquid composition of the present invention. The whole content of such one or more flavor components corresponds to the total content of the above ten flavor components, and all such ten flavor components need not be included. For example, in a case where only two flavor components among the ten flavor components are included, the total amount of the two flavor components may correspond to any equal to or less than the area value. When the whole content of the flavor components corresponds to any equal to or less than the area value, flavor is suppressed, and thus the liquid composition of the present invention can be widely used in various food or beverage products. The conditions of gas chromatography in measurement of the content of the flavor components are conditions described in Example 2 herein.

In one aspect of the present invention, the liquid composition includes, in the flavor components, one or more selected from ethyl acetate, butyl acetate and 1-butanol. The content of the flavor components can be defined in terms of the ratio relative to the peak area value of borneol as an internal standard material in measurement with gas chromatography. The ratio of the area value can be calculated according to the same method as described in "1. Fruit juice composition reduced in content of a flavor component". In a case where ethyl acetate is included, the content is 0.130 or less, preferably 0.100 or less, more preferably 0.080 or less in terms of the area ratio. In a case where butyl acetate is included, the content is 0.050 or less, preferably 0.040 or less, more preferably 0.020 or less in terms of the area ratio. In a case where 1-butanol is included, the content is 0.055 or less, preferably 0.040 or less, more preferably 0.020 or less in terms of the area ratio. Each of the flavor components is more preferable as the content thereof is lower, and a preferable lower limit value with respect to each of the flavor components is 0.001 or more, or 0.0001 or more in terms of the area ratio.

The liquid composition of the present invention includes, in the nutritional function components, one or more selected from citric acid, malic acid and sorbitol. In a case where citric acid is included, the content is 230 ppm to 310 ppm, preferably 240 ppm to 300 ppm, more preferably 250 ppm to 290 ppm. In a case where malic acid is included, the content is 1,300 ppm to 2,000 ppm, preferably 1,400 ppm to 1, 900 ppm, more preferably 1,450 ppm to 1,800 ppm. In a case where sorbitol is included, the content is 21,800 ppm to 30,000 ppm, preferably 22,000 ppm to 29,000 ppm, more preferably 23,000 ppm to 28,000 ppm.

The liquid composition of the present invention may further include, in the nutritional function components, amino acid. In a case where amino acid is included, the total amount of "sixteen amino acids except for Asn, Cys, Gln and Trp" among twenty amino acids constituting proteins is 220 ppm to 320 ppm, preferably 240 ppm to 300 ppm, more preferably 250 ppm to 290 ppm.

The fruit juice-derived saccharides included in the liquid composition of the present invention are not particularly limited, and preferably correspond to one or more selected from fructose, glucose and sucrose. In a case where fructose is included, the content is preferably 39,000 ppm to 48,000 ppm, more preferably 40,000 ppm to 47,000 ppm, further preferably 41,000 ppm to 46,000 ppm. In a case where glucose is included, the content is preferably 13,000 ppm to 22,000 ppm, more preferably 14,000 to 21,000 ppm, further preferably 15,000 to 20,000 ppm. In a case where sucrose is included, the content is preferably 3,500 ppm to 6,000 ppm, more preferably 3,700 to 5,800 ppm, further preferably 3,900 to 5,700 ppm.

The Brix of the liquid composition of the present invention is not particularly limited, and is preferably a Brix of 8 to 70. In a case where no concentration is performed after the activated carbon treatment, the Brix of the liquid composition of the present invention is preferably a Brix of 8 to 20, more preferably a Brix of 8 to 15, further preferably a Brix of 8 to 13. In a case where concentration is performed after the activated carbon treatment, the Brix of the liquid composition of the present invention is a Brix of 70 or less, preferably a Brix of 15 to 70, more preferably a Brix of 20 to 70, further preferably a Brix of 30 to 70, most preferably a Brix of 40 to 70. The Brix of the liquid composition of the present invention can be adjusted according to any known method, the Brix may be decreased by addition of water or the Brix may be increased by concentration. The Brix may also be enhanced by adding the fruit juice-derived saccharides and any other saccharides, or sugar alcohol or other natural or synthetic high intensity sweetener.

The liquid composition of the present invention includes the fruit juice-derived saccharides and the nutritional function components and is low in content of a flavor component, and thus is less changed in relish when added to a food or beverage product and can be utilized in various food or beverage products. The liquid composition of the present invention abundantly includes the saccharides and the nutritional function components, and can contribute to maintenance and improvement of health of consumers. According to a further preferable aspect of the present invention, the liquid composition of the present invention has a preferable taste, and can result in not only sweetness and nutrition, but also deep savor, when added to a food or beverage product.

According to another aspect of the present invention, a food or beverage product including the liquid composition of the present invention are provided. The "food or beverage product" is the same as those described in "3. Food or beverage product including fruit juice composition reduced in content of a flavor component". According to one aspect of the present invention, a desired food or beverage product can be obtained by adding water and/or other additive (a sweetener, an aroma material, an antioxidant, and the like) to the liquid composition of the present invention. For example, a beverage having a Brix 5 to 10 may be produced by adding water and an aroma material to the liquid composition of the present invention, which has a Brix of 10.

### 5. Concentrated product and concentrated liquid composition

Another embodiment of the present invention provides a concentrated product of the liquid composition of the present invention (hereinafter, referred to as "the concentrated product of the present invention"). Another embodiment of the present invention provides a concentrated liquid composition including fruit juice-derived saccharides, flavor component, and nutritional function component (hereinafter, referred to as "the concentrated liquid composition of the present invention"). In the present invention, the "flavor component" and the "nutritional function component" are the same as those described in "1. Fruit juice composition reduced in content of a flavor component", and the "fruit juice-derived saccharides" are the same as those described in "4. Liquid composition including fruit juice-derived saccharides, flavor component, and nutritional function component".

The concentrated product and the concentrated liquid composition of the present invention are each diluted at any ratio and used for a food or beverage product. The "food or beverage product" is the same as those described in "3. Food or beverage product including fruit juice composition reduced in content of a flavor component". For example, the concentrated product and the concentrated liquid composition of the present invention can be each used, as an undiluted solution of a syrup or a refreshing drink, for a beverage. Here, these can be diluted 2-fold, 3-fold, 4-fold, 5-fold, 6-fold, 7-fold, 8-fold, 9-fold or 10-fold, and then used. The concentrated product and the concentrated liquid composition of the present invention, which are concentrated, are thus preferable in terms of storageability and transportability.

The concentrated product and the concentrated liquid composition of the present invention each include the fruit juice-derived saccharides and the nutritional function components and are low in content of a flavor component and thus are less changed in relish when added to a food or beverage product and can be utilized in various food or beverage products. The concentrated product and the concentrated liquid composition of the present invention each abundantly includes the saccharides and the nutritional function components, and can contribute to maintenance and improvement of health of consumers. According to a further preferable aspect of the present invention, the concentrated product and the concentrated liquid composition of the present invention each have a preferable taste when diluted, and can each result in not only sweetness and nutrition, but also deep savor, when added to a food or beverage product.

The concentrated product of the present invention is a 2- to 10-fold concentrated product of the liquid composition of the present invention, and is preferably a 3 to 9-fold concentrated product, more preferably a 4 to 8-fold concentrated product, further preferably a 5 to 7-fold concentrated product.

A concentrated liquid composition according to one aspect of the present invention includes one or more fruit juice-derived saccharides, one or more flavor components, and one or more nutritional function components, the composition includes, in the flavor components, one or more flavor components selected from ethyl acetate, 2-methylbutanal, butyl acetate, pyridine, 2-methyl-1-butanol, p-cymene, 1-hexanol, furfural, furfuryl alcohol and 1-butanol, the whole content of the one or more flavor components is 4.55 or less in terms of the ratio of the area value thereof relative to the peak area value of a concentration of 10 ppb of borneol as an internal standard material, as measured in gas chromatography, and
the composition includes, in the nutritional function components, any one or more of the following:
citric acid: 1,495 ppm to 2,015 ppm,
malic acid: 8,450 ppm to 13,000 ppm, and
sorbitol: 141,700 ppm to 195,000 ppm.
The concentrated liquid composition corresponds to a 6.5-fold concentrated product of the liquid composition of the present invention.

A concentrated liquid composition according to another aspect of the present invention includes one or more fruit juice-derived saccharides, one or more flavor components, and one or more nutritional function components, the composition includes, in the flavor components, one or more flavor components selected from ethyl acetate, 2-methylbutanal, butyl acetate, pyridine, 2-methyl-1-butanol, p-cymene, 1-hexanol, furfural, furfuryl alcohol and 1-butanol, the whole content of the one or more flavor components is 3.50 or less in terms of the ratio of the area value thereof relative to the peak area value of a concentration of 10 ppb of borneol as an internal standard material, as measured in gas chromatography, and
the composition includes, in the nutritional function components, any one or more of the following:
citric acid: 1,150 ppm to 1,550 ppm,
malic acid: 6,500 ppm to 10,000 ppm, and
sorbitol: 109,000 ppm to 150,000 ppm.
The concentrated liquid composition corresponds to a 5-fold concentrated product of the liquid composition of the present invention.

The Brix of the concentrated product of the present invention and that of the concentrated liquid composition of the present invention are each preferably 80 or less, preferably 70 or less, more preferably a Brix of 15 to 70, further preferably a Brix of 20 to 70, particularly preferably a Brix of 30 to 70, most preferably a Brix of 40 to Brix of 70.

Each of the amounts of the concentrated product and the concentrated liquid composition of the present invention, added to a food or beverage product, is not particularly limited, and these are preferably added so that the Brix of the food or beverage product is less than 13, less than 12, less than 11, less than 10, less than 9, less than 8, less than 7, less than 6, less than 5, less than 4, less than 3, less than 2, or less than 1. The concentrated product and the concentrated liquid composition of the present invention may be each diluted to a proper concentration before the addition.

The concentrated product and the concentrated liquid composition of the present invention can be obtained by concentrating the liquid composition of the present invention. The concentration can be performed according to the method described in "2. Method for producing fruit juice composition reduced in content of a flavor component". The concentration basically allows the water content to be removed and allows the nutritional function components and the saccharides to be retained. On the other hand, the flavor components are sometimes partially removed in the concentration, and the flavor components are sometimes further decreased after the concentration, relative to the nutritional function components retained in the concentration. The liquid composition of the present invention and the concentrated liquid composition thereof, however, are more preferable as the content of the flavor components is lower, and thus the flavor components may be partially removed by the concentration. In any case, in the case of 2-fold, 3-fold, 4-fold, 5-fold, 6-fold, 7-fold, 8-fold, 9-fold or 10-fold concentration of the liquid composition of the present invention, the concentrations of the saccharides and the nutritional function components are each 2-fold, 3-fold, 4-fold, 5-fold, 6-fold, 7-fold, 8-fold, 9-fold or 10-fold and the flavor components can be partially removed, and therefore the content of the flavor components corresponds to 2-fold or less, 3-fold or less, 4-fold or less, 5-fold or less, 6-fold or less, 7-fold or less, 8-fold or less, 9-fold or less, or 10-fold or less.

The concentrated product and the concentrated liquid composition of the present invention can be used for preparing a beverage. The preparation of a beverage can be performed by mixing water, carbonated water, a fruit juice, or the like with the concentrated product or the concentrated liquid composition of the present invention. The mixing may be performed by adding water, carbonated water, a fruit juice, or the like to a container receiving the concentrated product or the concentrated liquid composition, may be performed by adding the concentrated product or the concentrated liquid composition to a container receiving water, carbonated water, a fruit juice, or the like, or may be performed while the concentrated product or the concentrated liquid composition, and water, carbonated water, a fruit juice, or the like being moved to another container. The concentrated product or the concentrated liquid composition and the beverage may be prepared in the same industrial plant, or the beverage may be prepared by packing the concentrated product or the concentrated liquid composition in a container or the like, transporting the resultant to another industrial plant, and performing mixing with water, carbonated water, a fruit juice, or the like. The beverage may also be prepared by transporting the concentrated product or the concentrated liquid composition to an eating house or the like, and mixing the concentrated product or the concentrated liquid composition with water, carbonated water, a fruit juice, or the like by a user in the eating house. In a case where a carbonated beverage is prepared, carbon dioxide gas can also be supplied by diluting the concentrated product or the concentrated liquid composition with water and then injecting carbon dioxide gas. The amount of the carbon dioxide gas supplied to the carbonated beverage can be defined by the gas pressure. The carbon dioxide gas can be supplied to the concentrated product or the concentrated liquid composition so that the gas pressure in the carbonated beverage is, for example, 1.7 kgf/cm² or more, 1.89 kgf/cm² or more, or 2.15 kgf/cm² or more. The upper limit of the amount of the carbon dioxide gas supplied may be, if necessary, provided. For example, the carbon dioxide gas can be supplied to the concentrated product or the concentrated liquid composition so that the gas pressure in the carbonated beverage is 5.0 kgf/cm² or less, or 4.0 kgf/cm² or less. The carbonated beverage can be packaged. The container here used can be a container having any form and material, and may be, for example, a container such as a bin, a can, a barrel, or a PET bottle. The method for packing the carbonated beverage to the container is also not particularly limited.

The word "at least" herein means that the number of particular items may be equal to or more than the number recited. The word "about" in the present application means that a subject is present in the range of ±25%, ±10%, ±5%, ±3%, ±2% and ±1% of the numerical number following "about". For example, "about 10" means the range from 7.5 to 12.5.

### Examples

Hereinafter, the present invention will be specifically described with reference to Examples, but the present invention is not limited to the following Examples.

### [Example 1] Comparison of pear juice and other fruit juice

### Experimental method

Eight concentrated fruit juices each having a Brix of 45 to 60 [mango (grown in India), banana (grown in Republic of Costa Rica), apple (grown in Tohoku district, Japan), white grape (grown in South America), orange (grown in Europe), pineapple (grown in Thailand), pear (grown in Europe), and peach (grown in America)] were each diluted with pure water so that the Brix was 10, thereby obtaining each fruit juice sample solution. A saccharide-acid solution obtained by dissolving sucrose and citric acid in pure water so that the solution contains 10% of sucrose (Brix 10) and 0.2% of citric acid was used as a control solution (also referred to as control A) . The Brix with respect to the concentrated fruit juice, the composition, and the like, is usually a value measured as a refractometer index for sugar, and corresponds to the amount of a soluble solid content in a liquid.

The control solution and each of the fruit juice sample solutions were subjected to sensory evaluation by persons trained with respect to the sensory evaluation (six persons), as panelists, in the state where the persons each wore a nose clip and thus did not feel any aroma. The evaluation criteria was as follows: any case where the taste quality was comparable to that of the control solution being a saccharide-acid solution was defined as Level 1, any case where the taste quality was significantly different from that of the control solution was defined as Level 8, and any taste qualities therebetween were defined as Level 2 to Level 7 depending on the approximation to that of the control solution; and the average value of the scores of the six persons was calculated.

### Results

The results are summarized in Table 1 below.

**Table 1**

| Fruit juice sample solution | Mango | Banana | Apple | White grape | Orange | Pineapple | Pear | Peach |
|---|---|---|---|---|---|---|---|---|
| Score | 5.2 | 6.2 | 2.7 | 2.7 | 7.3 | 5.3 | 1.3 | 7.2 |

As in Table 1, the taste qualities of apple, white grape and pear among the eight juices were more approximate to that of the control solution. It was revealed therefrom that the taste qualities of apple, white grape and pear juices were approximate to that of the saccharide-acid solution in the state where no feeling of aroma was made by a nose clip. Hereinafter, evaluations and studies were made by use of pears in more detail.

### [Example 2] Evaluation of optimum pore size of activated carbon

### Experimental method

Three types of activated carbon [GLP-C (average pore size 1.5 nm, manufactured by Kuraray Co., Ltd.), GW-H (average pore size 0.7 to 0.8 nm, manufactured by Kuraray Co., Ltd.), and PGW-150MP (average pore size 0.31 nm, manufactured by Kuraray Co., Ltd.)] different in pore size were each added at 1000 ppm to a fruit juice solution obtained by diluting a clear pear concentrated fruit juice (grown in Europe) with pure water so that the Brix was 10, and subjected to stirring (500 rpm) with a stirrer at 30°C for 5 hours so that a state was kept where the activated carbon was mixed with the fruit juice without being precipitated. Thereafter, centrifugation was performed at 8000 rpm for 5 minutes, and the supernatant was taken by filtration with a Paper Filter No. 2 manufactured by ADVANTEC Co., Ltd., and then filtration with a 0.45-µm filter, thereby recovering the supernatant where the activated carbon was removed. A fruit juice solution to which no activated carbon was added was adopted as a control solution (also referred to as control B), and the aroma intensity and the taste of each of the solutions were sensory evaluated. The evaluation criteria were as described below. The Brix, the amount of the flavor components, and each of the contents of the saccharides (fructose, glucose, sucrose), and citric acid, malic acid and amino acid which were typical nutritional function components included in the pear juice, and sorbitol as a sugar alcohol, of each of the sample solutions, were analyzed. The analysis methods were as represented below.

### <Amount of flavor components>

### GC analysis method

Apparatus ... GC: Agilent Technologies 7890A, MS: Agilent Technologies 5975C
Pretreatment/injection method ... heating desorption using GERSTEL DHS
Column ... HP-INNOWAX (length: 60 m, diameter: 0.250 mm, thickness: 0.25 µm)
Temperature condition ... 40°C to 240°C (5°C/min) (post-run: 260°C, 10 min)
Carrier gas ... He
Internal standard material ... adding 10 ul of a borneol solution having a concentration of 10 ppm to 10 ml of a specimen, and adjusting the concentration of borneol in the specimen to 10 ppb.

### <Measurement conditions of saccharides and sorbitol>

Apparatus: Agilent 1100 series
Column: Shodex NH2P-50 4E (40°C)
Mobile phase: aqueous 75% acetonitrile solution
Detection: RI

### <Malic acid, citric acid>

Prominence organic acid analysis system (manufactured by Shimadzu Corporation) was used.
Mobile phase: mobile phase for organic acid analysis system
Buffer: buffer solution for organic acid analysis system
Column: Shim-pack SPR-H
Detection: electrical conduction detection by COD-10Avp

### <Whole amount of sixteen amino acids except for Asn, Cys, Gln and Trp>

The whole amount of sixteen amino acids except for Asn, Cys, Gln and Trp was measured as follows. First, pre-column derivatized amino acid analysis (HPLC) with a derivatized reagent NBD-F (4-Fluoro-7-nitro-2,1,3-benzoxadiazole) was performed by using an ultrahigh-speed amino acid analysis kit for Chromaster (registered trademark) manufactured by Hitachi High-Tech Science Corporation. The analysis was made to thereby perform quantitative determination, and the total content of the sixteen amino acids except for Asn, Cys, Gln and Trp was calculated.

### <Sensory evaluation>

### Aroma intensity

Level 3: no fruit aroma was felt
Level 2: almost no fruit aroma was felt
Level 1: slight fruit aroma was felt
Level 0: fruit aroma was strongly felt comparably to that of the control solution

### Taste

Level 3: taste quality approximate to that of the control solution
Level 2: taste quality slightly approximate to that of the control solution
Level 1: taste quality slightly different from that of the control solution
Level 0: taste quality completely different from that of the control solution

### Overall evaluation

The overall evaluation was performed based on the rating of Level 0, Level 1, Level 2 and Level 3 in evaluation of each of the items.

The evaluation criteria were fitted in advance, and evaluation was then performed according to the evaluation criteria, by persons trained with respect to sensory (six persons), as panelists. In the overall evaluation, any case where the aroma intensity was rated as Level 2 or higher and the taste was rated as Level 1 or higher was determined as pass.

### Results

The results are summarized in Table 2 below.

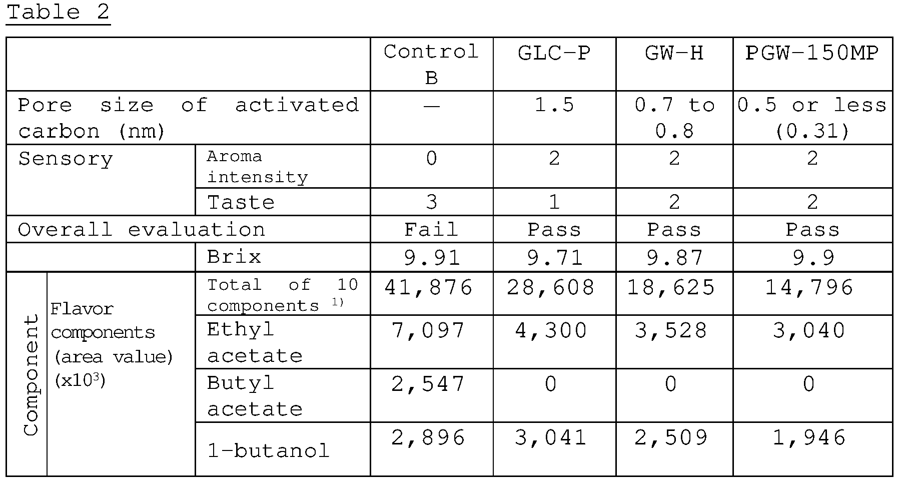

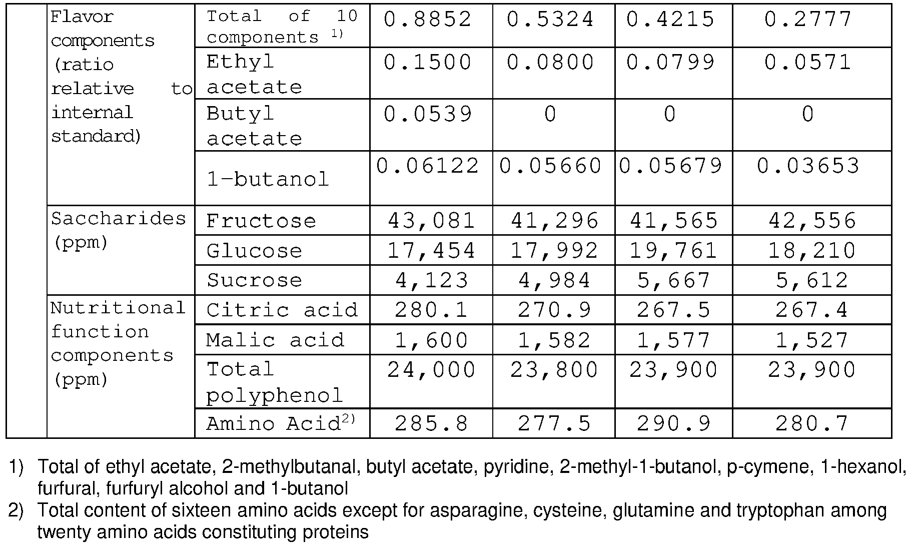

It was revealed from Table 2 that any activated carbon treatment could be performed to thereby remove the aroma intensity to some extent that almost no feeling was made in the sensory evaluation. On the other hand, the taste quality in the case of a pore size of 1.5 nm or more was different from that of the control, with respect to the taste. It was revealed that activated carbon having a pore size of 0.8 nm or less could be used to thereby remove flavor to some extent that no difference could be sensory detected and also not only allow any taste quality comparable to that of the control to be kept, but also allow nutritional function components (citric acid, malic acid, amino acids, and sorbitol) and saccharides (fructose, glucose, and sucrose) to be retained as compared with the case of use of activated carbon larger in pore size. Therefore, activated carbon having a pore size of 0.5 nm or less was used in the following validation.

### [Example 3] Validation of optimum treatment conditions of activated carbon

### Experimental method

A fruit juice solution obtained by diluting a clear pear concentrated fruit juice (grown in Europe) with pure water so that the Brix was 10 was treated with activated carbon (PGW-150MP manufactured by Kuraray Co., Ltd.) in the same manner as in Example 2 in conditions shown in Table 3-1 below. Thereafter, the supernatant was recovered where the activated carbon was removed by centrifugal filtration according to the same method as in Example 2. A fruit juice solution to which no activated carbon was added was adopted as a control solution, and analysis and sensory evaluation were performed according to the method described in Example 2.

**Table 3-1**

| Amount of activated carbon (ppm) | 0 (Control B) | 1000 | 2500 | 5000 | 7000 | 10000 | 4000 |
|---|---|---|---|---|---|---|---|
| Treatment time (h) | - | 5 | 5 | 1 | 1 | 1 | 1 |

### Results

The results are summarized in Table 3-2 below. In the overall evaluation, any case where the aroma intensity was rated as Level 2 or higher and the taste was rated as Level 1 or higher was determined as pass as in Example 2.

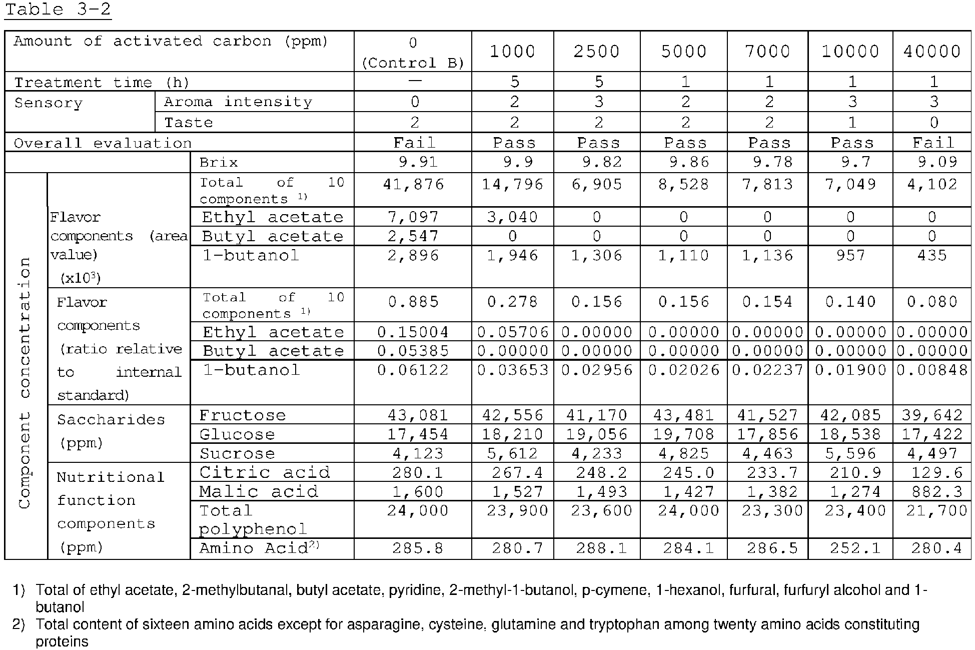

As represented in Tables 3-1 and 3-2, flavor could be removed to such an extent that almost no aroma was felt in the sensory evaluation in respective cases where 1000 ppm and 2500 ppm of the activated carbon were added and the treatment was made for 5 hours, and 5000 ppm, 7000 ppm, 10000 ppm, and 40000 ppm of the activated carbon were added and the treatment was made for 1 hour, by the same method as in Example 2. It was also revealed that not only the taste, but also nutritional function components (citric acid, malic acid, sorbitol, and amino acids) and saccharides (fructose, glucose, and sucrose) could be retained in a case where the treatment was made by 1000 ppm and 2500 ppm of the activated carbon for 5 hours or the treatment was made by 5000 ppm, 7000 ppm and 10000 ppm for 1 hour. Therefore, the activated carbon treatment was performed in the following validation in any condition selected from the above conditions.

### [Example 4] Evaluation of flavor in blending of beverage

### Experimental method

A beverage sample was produced by dissolving [sucrose or fruit sugar (Multisweet fruit Pear GF, liquid, manufactured by Doehler Japan), the fruit juice untreated with activated carbon, used in Example 2, or the fruit juice treated with activated carbon (treated with activated carbon in an amount of 2500 ppm for 5 hours, in Example 3)], citric acid, trisodium citrate, and an aroma material in pure water at a ratio represented in Table 4-1 below so that the Brix was 5, and a control (also referred to as control C) was obtained by adding sucrose. In general, the Brix relating to sweet of a food or beverage product can be calculated from the degree of sweetness of each sweetener relative to that of sucrose and the content of such each sweetener, or can be determined according to a sensory test by comparison with a sucrose solution serving as a standard.

The evaluation criteria were fitted in advance, and the aroma intensity and the taste quality were sensory evaluated according to the following evaluation criteria. Persons trained with respect to sensory (six persons) were adopted as panelists, and the evaluation was performed.

### <Sensory evaluations>

### Aroma intensity

Level 3: no aroma other than the aroma material added was felt
Level 2: almost no aroma other than the aroma material added was felt
Level 1: aroma other than the aroma material added was slightly felt
Level 0: aroma other than the aroma material added was strongly felt

### Sweetness

Level 3: sweetness comparable to that of the control
Level 2: sweetness slightly less than that of the control
Level 1: sweetness less than that of the control
Level 0: no sweetness was felt

### Body/complicated taste

Level 3: body and complicated taste were surely felt
Level 2: body and complicated taste were felt
Level 1: body and complicated taste were slightly felt
Level 0: neither any body nor any complicated taste was felt

### Overall evaluation

The overall evaluation was performed based on Level 0, Level 1, Level 2 and Level 3 in evaluation of each of the items.

Persons trained with respect to the sensory (six persons) were adopted as panelists, and the evaluations were performed according to the evaluation criteria.

**Table 4-1**

| | Control C | Fruit Sugar | Juice sample untreated with activated carbon | Juice sample treated with activated carbon |
|---|---|---|---|---|
| Sucrose (g) | 50 | 0 | 0 | 0 |
| Fruit sugar (g) | 0 | 50 | 0 | 0 |
| Fruit juice (mL) | 0 | 0 | 500 | 500 |
| Citric acid (g) | 1.40 | 1.40 | 0.67 | 0.74 |
| Trisodium citrate (g) | 0.12 | 0.12 | 0.00 | 0.00 |
| Aroma material (mL) | 1 | 1 | 1 | 1 |
| Total (L) | 1 | 1 | 1 | 1 |

### Results

The results are summarized in Table 4-2 below. Any case where all the aroma, the sweetness and the body/complicated taste were rated as Level 2 or higher was determined as pass.

**Table 4-2**

| | | Control C | Fruit Sugar | Juice sample untreated with activated carbon | Juice sample treated with activated carbon |
|---|---|---|---|---|---|
| Aroma | | 3 | 3 | 1 | 3 |
| Taste | Sweetness | 3 | 3 | 3 | 3 |
| | Body/complicated taste | 0 | 0 | 3 | 3 |
| Overall evaluation | | Fail | Fail | Fail | Pass |

It was revealed from Table 4-2 that, in a case where sucrose in the beverage was replaced with fruit sugar serving as white sugar, no any aroma other than the aroma material was felt as in the control and the savor was almost comparable to that of the control. On the other hand, in a case where the sucrose was replaced with the fruit juice, the influence of fruit juice-derived aroma was strongly felt and such relish in this case was felt in a limited manner in the pear beverage. In a case where, however, a fruit juice from which flavor components were removed by the activated carbon treatment was added, such relish was felt in an unlimited manner to any particular fruit juice beverage, and corresponded to any savor of the type of a base beverage capable of being extended to variously relished beverages due to blending of various aroma materials and/or various raw materials. The fruit juice of such a case also allowed not only sweetness, but also deep savor to be felt, and was also excellent as a base beverage, as compared with that of each case of blending of sucrose or the fruit sugar.

## Claims

1. A fruit juice composition reduced in content of a flavor component and not substantially decreased in two or more components of nutritional function components and one or more components of saccharides, as compared with a pear juice as a raw material.

2. The composition according to claim 1, wherein the nutritional function components are at least two selected from the group consisting of mineral, organic acid, vitamin, polyphenol, protein, amino acid, dietary fiber and glucide (except for saccharides).

3. The composition according to claim 1 or 2, wherein the nutritional function components are at least two selected from the group consisting of citric acid, malic acid, sorbitol, and total sixteen amino acids except for asparagine, cysteine, glutamine and tryptophan among twenty amino acids constituting proteins.

4. The composition according to any one of claims 1 to 3, wherein the saccharides correspond to at least one selected from the group consisting of fructose, glucose and sucrose.

5. The composition according to any one of claims 1 to 4, wherein the flavor component is one or more selected from the group consisting of flavor components of aldehydes, flavor components of alcohols, flavor components of esters, flavor components of ketones and flavor components of amines.

6. The composition according to claim 5, wherein any one or more of a total content of the flavor components of aldehydes, a total content of the flavor components of alcohols, a total content of the flavor components of esters, a total content of the flavor components of ketones and a total content of the flavor components of amines are reduced to 90% or less.

7. The composition according to claim 5 or 6, wherein the flavor components of aldehydes correspond to one or more selected from acetaldehyde, nonanal, 2-methylbutanal, furfural and benzaldehyde.

8. The composition according to any one of claims 5 to 7, wherein the flavor components of alcohols correspond to one or more selected from isobutyl alcohol, 3-methyl-1-butanol, 1-pentanol, 1-butanol, furfuryl alcohol, benzyl alcohol, 1-hexanol, 1-nonanol, 2-ethyl-1-hexanol, 2-methyl-1-butanol and 1-octanol.

9. The composition according to any one of claims 5 to 8, wherein the flavor components of esters correspond to one or more selected from butyl acetate, ethyl acetate, ethyl butyrate, methyl butyrate and ethyl hexanoate.

10. The composition according to any one of claims 1 to 9, comprising ethyl acetate, butyl acetate and 1-butanol as the flavor components, wherein a total content thereof is decreased as compared with a fruit juice as a raw material.

11. The composition according to any one of claims 1 to 10, wherein a total content of ethyl acetate, 2-methylbutanal, butyl acetate, pyridine, 2-methyl-1-butanol, p-cymene, 1-hexanol, furfural, furfuryl alcohol and 1-butanol of the flavor components is 0.70 or less in terms of a ratio of an area value thereof relative to a peak area value of a concentration of 10 ppb of borneol as an internal standard material in gas chromatography measurement.

12. A method for producing a fruit juice composition reduced in content of a flavor component and not substantially decreased in two or more components of nutritional function components and one or more components of saccharides, as compared with a pear juice as a raw material, the method comprising a step of decreasing the flavor component from a pear juice.

13. The method according to claim 12, wherein the flavor component is decreased by contacting the pear juice with a porous adsorbent.

14. The method according to claim 13, wherein the porous adsorbent is at least one selected from the group consisting of activated carbon, zeolite, silica, apatite and a polymer adsorbent.

15. The method according to claim 13 or 14, wherein the porous adsorbent has an average pore size of 0.2 to 0.5 nm.

16. The method according to any one of claims 13 to 15, wherein the porous adsorbent is at a concentration of 500 to 6000 ppm.

17. The method according to any one of claims 13 to 16, wherein the porous adsorbent is activated carbon.

18. A beverage comprising the composition according to any one of claims 1 to 11.

19. The beverage according to claim 18, wherein a Brix in the composition is less than 5 in total.

20. The beverage according to claim 18 or 19, wherein a flavor component of a fruit different from a pear as a raw material of the composition is added.

21. The beverage according to any one of claims 18 to 20, wherein a high intensity sweetener is added.

22. The beverage according to claim 21, wherein the high intensity sweetener is at least one selected from the group consisting of rebaudioside M, rebaudioside D, rebaudioside A, steviol, steviol glycoside, a stevia extract, stevioside, mogroside IV, mogroside V, a Lo Han Guo sweetener, monatin, curculin, glycyrrhizin, thaumatin, monellin, aspartame, advantame, alitame, saccharin, cyclamate, acesulfame K, sucralose, dulcin, brazzein, neohesperidin dihydrochalcone and a combination thereof.

23. A liquid composition comprising:
one or more fruit juice-derived saccharides;
one or more flavor components; and
one or more nutritional function components, wherein
the composition comprises, in the flavor components, one or more flavor components selected from ethyl acetate, 2-methylbutanal, butyl acetate, pyridine, 2-methyl-1-butanol, p-cymene, 1-hexanol, furfural, furfuryl alcohol and 1-butanol, and a whole content of the one or more flavor components is 0.70 or less in terms of a ratio of an area value thereof relative to a peak area value of a concentration of 10 ppb of borneol as an internal standard material, as measured in gas chromatography, and
the composition comprises, in the nutritional function components, any one or more of the following:
citric acid: 230 ppm to 310 ppm,
malic acid: 1,300 ppm to 2,000 ppm, and
sorbitol: 21,800 ppm to 30,000 ppm.

24. The liquid composition according to claim 23, wherein the composition includes, in the flavor components, any of ethyl acetate, butyl acetate and 1-butanol.

25. The liquid composition according to claim 23 or 24, wherein the composition further comprises, in the nutritional function components, amino acid.

26. The liquid composition according to claims 23 to 25, wherein a Brix is 8 to 20.

27. A beverage comprising the liquid composition according to any one of claims 23 to 26.

28. The beverage according to claim 27, wherein a Brix is 1 to 10.

29. A 2- to 10-fold concentrated product of the liquid composition according to any one of claims 23 to 26.

30. A concentrated liquid composition comprising:
one or more fruit juice-derived saccharides;
one or more flavor components; and
one or more nutritional function components, wherein
the composition comprises, in the flavor components, one or more flavor components selected from ethyl acetate, 2-methylbutanal, butyl acetate, pyridine, 2-methyl-1-butanol, p-cymene, 1-hexanol, furfural, furfuryl alcohol and 1-butanol, and a whole content of the one or more flavor components is 4.55 or less in terms of a ratio of an area value thereof relative to a peak area value of a concentration of 10 ppb of borneol as an internal standard material, as measured in gas chromatography, and
the composition comprises, in the nutritional function components, any one or more of the following:
citric acid: 1,495 ppm to 2,015 ppm,
malic acid: 8,450 ppm to 13,000 ppm, and
sorbitol: 141,700 ppm to 195,000 ppm.
